Europäisches Patentamt

European Patent Office

Office européen des brevets

(11) Publication number: **0 282 969**
**A2**

## (12) EUROPEAN PATENT APPLICATION

(21) Application number: **88104084.4**

(22) Date of filing: **15.03.88**

(51) Int. Cl.⁴: **G06F 7/00 , G06F 13/38**

(30) Priority: **18.03.87 JP 61011/87**

(43) Date of publication of application:
**21.09.88 Bulletin 88/38**

(84) Designated Contracting States:
**DE FR GB**

(71) Applicant: **HITACHI, LTD.**
**6, Kanda Surugadai 4-chome Chiyoda-ku**
**Tokyo 100(JP)**

(72) Inventor: **Matsumura, Hisashi**
**455-8, Hirasawa**
**Hadano-shi(JP)**
Inventor: **Wada, Hiroyuki**
**2-1, Midoricho**
**Hadano-shi(JP)**
Inventor: **Ugajin, Atsushi**
**Hitachi Satoshiryo 641, Tokawa**
**Hadano-shi(JP)**
Inventor: **Niwa, Tokuhiro**
**Hitachi Satoshiryo 641, Tokawa**
**Hadano-shi(JP)**
Inventor: **Nakamura, Masayuki**
**108-1, Aza Fujimigaoka Oaza Yagoto**
**Tenpakucho**
**Showa-ku Nagoya(JP)**
Inventor: **Nakai, Kouichi**
**1937, Torii, Shonakacho**
**Owariasahi-shi(JP)**
Inventor: **Inagawa, Takashi**
**Honjigahara Jutaku 5-305 100-3, Midorigaoka**
**Midoricho Owariasahi-shi(JP)**

(74) Representative: **Patentanwälte Beetz sen. -**
**Beetz jun. Timpe - Siegfried -**
**Schmitt-Fumian- Mayr**
**Steinsdorfstrasse 10**
**D-8000 München 22(DE)**

(54) Computer system having byte sequence conversion mechanism.

(57) In a computer system with a configuration in which a plurality of processors (1, 2) respectively having different word access methods access a common memory (19), there is disposed between the common memory and the processors a conversion circuit (29-32, 40-47) to reverse the sequence of the bytes constituting each word. Furthermore, there are disposed between input/output controllers (121, 122) and the processor (101) a conversion circuit (115-118) to reverse the sequence of the bytes constituting each word.

FIG. 1

# COMPUTER SYSTEM HAVING BYTE SEQUENCE CONVERSION MECHANISM

## BACKGROUND OF THE INVENTION

The present invention relates to a system in which processors respectively having different word access methods access a common memory shared therebetween and a processor and an input/output controller respectively having different word access methods effect a data transfer therebetween, and in particular, to a computer system suitable to accommodate processors and input/output controllers respectively having different architectures with respect to the word access method.

In a type of a microprocessor (to be referred to as an MPU-A herebelow), for example, as described in page 15 of "iAPX86 Macro Assembler Language Programming Manual" published by the Intel Corp. in 1981, a word comprises two bytes defined as a low-order byte and a high-order byte, which are arranged at a lower-address location and a higher-address location, respectively. The definition of the word access method is opposite to the word definition of other microprocessors (to be referred to as an MPU-B herebelow).

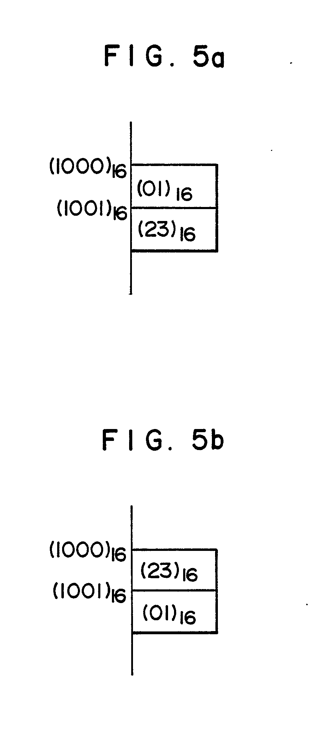

FIGS. 5a and 5b show concrete examples associated with this problem. In both cases, a value $(0123)_{16}$ is stored in a word beginning from an address $(1000)_{16}$ in a memory. FIG. 5a corresponds to a case of the MPU-B in which a high-order byte of the word value is stored at a lower-address location, whereas FIG. 5b represents a case of the MPU-A in which a low-order byte of the word value is stored at a lower-address location.

According to the prior art technology, in a case where microprocessors having different word access methods access a common memory shared therebetween, an operation to reverse the sequence of or exchange the high-order byte and the low-order byte of a word has not been taken into consideration, and hence the operation is required to be accomplished by a program of one of the microprocessors, which leads to a deterioration of the processing performance.

A similar problem also arises in an input/output controller or an input/output (I/O) adapter operating according to a local memory method. For example, in a case where a processor of the MPU-A system is to be connected to an I/O adapter of the MPU-B system, it is necessary to reverse the sequence of the high-order byte and the low-order byte of a word to be transferred between the processor and the I/O adapter, namely, a program of the microprocessor must be used to achieve the byte sequence change operation.

## SUMMARY OF THE INVENTION

It is therefore an object of the present invention to provide a computer system where two processors respectively having different word access methods access a common memory shared therebetween in which the difference between the word access methods of the respective computers is absorbed so as to prevent the deterioration of the processing performance.

To object above can be solved by disposing means between the common memory and the processors which is responsive to a control signal sent from either one of the processors so as to reverse a sequence of bytes constituting a word or to directly pass the bytes of the word.

Another object of the present invention is to provide a computer system where data is transferred between a processor and an input/output controller respectively having different word access methods in which the difference between the word access methods is absorbed so as to prevent the deterioration of the processing performance.

The object above can be solved by disposing means between the input/output controller and the processor which is responsive to a control signal sent from the processor so as to reverse a sequence of bytes constituting a word or to directly pass the bytes of the word.

## BRIEF DESCRIPTION OF THE DRAWINGS

The present invention will be apparent from the following detailed description taken in conjunction with the accompanying drawings in which:

FIG. 1 is a schematic block diagram showing an embodiment according to the present invention in which a conversion circuit is located between a processor and a common memory;

FIG. 2 is a schematic block diagram showing another embodiment of the present invention of which the configuration is different from that of the embodiment of FIG. 1;

FIG. 3 is a schematic block diagram showing still another embodiment of the present invention of which the configuration is different from that of the embodiment of FIG. 1;

FIG. 4 is a schematic block diagram showing further another embodiment according to the present invention in which a conversion circuit is located between a processor and an input/output controller; and

FIG. 5 is an explanatory diagram useful to explain a memory access method to be employed by processors having different word access methods.

## DESCRIPTION OF THE PREFERRED EMBODIMENTS

Referring now to the drawings, description will be given of embodiments according to the present invention.

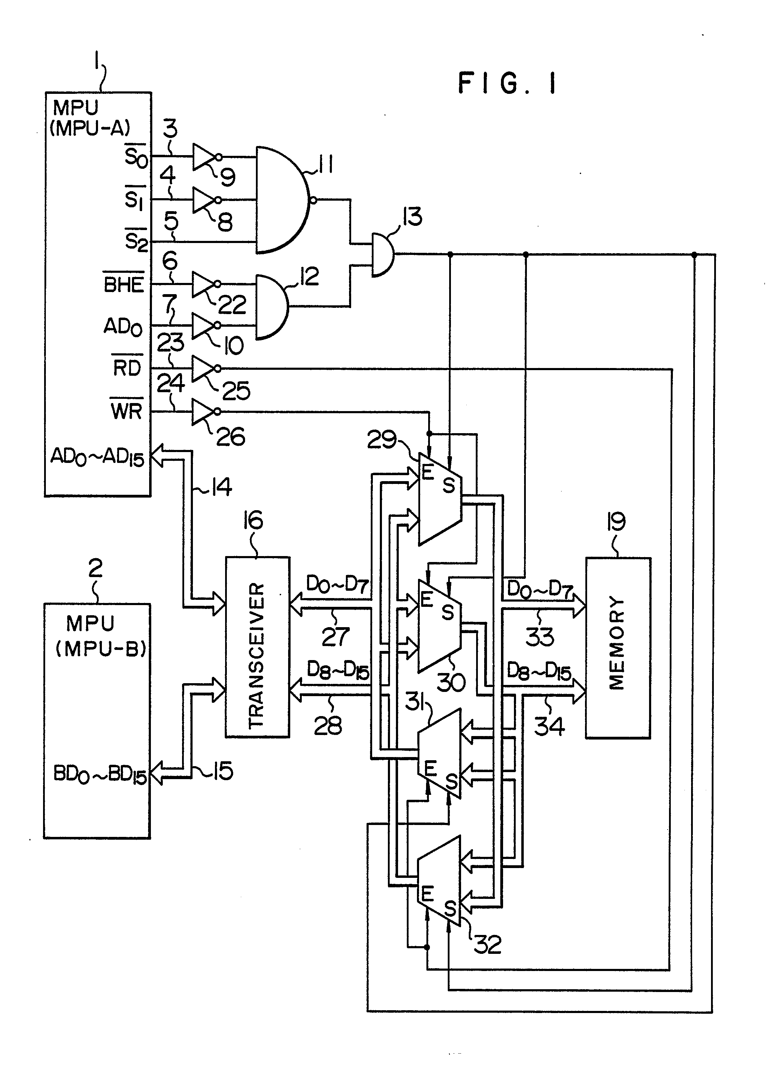

FIG. 1 is a block diagram schematically showing a configuration of an embodiment of the present invention. In this configuration, a microprocessor MPU 1 is a processor operating in the word access method of the MPU-A, whereas a microprocessor MPU 2 is a processor operating in the word access method of the MPU-B. The MPU1 and MPU 2 access a common memory 19 shared therebetween. Signals $\overline{S_0}$, $\overline{S_1}$, and $\overline{S_2}$ respectively indicate states of the MPU 1. Signal $\overline{BHE}$ (Byte High Enable) is set to 0 when the high-order byte of a word is accessed. The circuit configuration further includes inverters 8-10, 22, 25, and 26, an NAND circuit 11, and AND circuits 12 and 13. These circuit elements are respectively disposed on the sides of the MPU 1 and MPU 2. Signals $\overline{S_0}$, $\overline{S_1}$, and $\overline{S_2}$ are connected to the input port of the NAND circuit 11 via a signal line 3 and inverter 9, a signal line 4 and the inverter 8, and a signal line 5, respectively. Signals $\overline{BHE}$ and $AD_0$ are respectively fed via a signal line 6 and the inverter 22 and via a signal line 7 and the inverter 10 to the AND circuit 12. Outputs from the NAND circuit 11·and the AND circuit 12 are inputted to the AND circuit 13. Reference numeral 16 denotes a transceiver driving 16 line bidirectional bus (for 16 bits). The transceiver 16 is effective as a buffer driver of the bidirectional bus line when the drive capacity of the microprocessor itself becomes to be insufficient due to an increase in the number of memories and I/O ports. Signals $AD_0$-$AD_{15}$ of the MPU 1 are connected via a data bus 14 to the transceiver 16. The signal $AD_0$ is the first bit of data and identical to the signal $AD_0$ described above. Signals $BD_0$-$BD_{15}$ of the MPU 2 are delivered via a data bus 15 to the transceiver 16. Reference numerals 29 and 30 designate selectors for selecting either the data signals $D_0$-$D_7$ or $D_8$-$D_{15}$ outputted from the transceiver 16. Reference numerals 31 and 32 denote selectors for selecting either the data signals $D_0$-$D_7$ or $D_8$-$D_{15}$ outputted from a memory 19. The selectors 29-32 constitute a circuit to convert the byte sequence and are arranged on the side of the memory 19. A data bus 27 disposed for transferring the signals $D_0$-$D_7$ inputted to or outputted from the transceiver 16 is connected to input terminals $D_0$-$D_7$ of the selector 29, input terminals $D_8$-$D_{15}$ of the selector 30, and the output side of the selector 31. A data bus 28 disposed for transferring the signals $D_8$-$D_{15}$ inputted to or outputted from the transceiver 16 is connected to input terminals $D_8$-$D_{15}$ of the selector 29, input terminals $D_0$-$D_7$ of the selector 30, and the output side of the selector 32. A signal line 33 disposed for transferring the signals $D_0$-$D_7$ inputted to or outputted from the memory 19 is connected to input terminals $D_0$-$D_7$ of the selector 31, input terminals $D_8$-$D_{15}$ of the selector 32, and the output side of the selector 29. A signal line 34 disposed for transferring the signals $D_8$-$D_{15}$ inputted to or outputted from the memory 19 is connected to input terminals $D_8$-$D_{15}$ of the selector 31, input terminals $D_0$-$D_7$ of the selector 32, and the output side of the selector 30. When the AND circuit 13 outputs 0, the selectors 29-30 select signals on the input terminals $D_0$-$D_7$ and output the selected signals, whereas when the output from the AND circuit 13 is 1, the selectors 29-32 select signals on the input terminals $D_8$-$D_{15}$ and output the selected signals. Signal $\overline{RD}$ issued from the MPU 1 to effect a read operation on the memory 19 is connected via the signal line 23 and the inverter 25 to the respective enable terminals of the selectors 31 and 32. Signal $\overline{WR}$ requested by the MPU 1 to effect a write operation on the memory 19 is connected via the signal line 24 and the inverter 26 to the respective enable terminals of the selectros 29 and 30. For the memory read operation, the selectors 31-32 are enabled, whereas for the memory write operation, the selectors 29-30 are enabled.

Next, description will be given of operations of the embodiment. When the MPU 1 achieves a word access on the memory 19, the signals $\overline{BHE}$ and $AD_0$ are both set to 0 and the output from the AND circuit 12 becomes to be 1. When the MPU 1 accesses the memory to request data other than the common data (for example, in a case of an instruction fetch), ( $\overline{S_0}$, $\overline{S_1}$, $\overline{S_2}$) = (0, 0, 1) results; consequently, the NAND circuit 11 outputs 0. When the MPU 1 accesses the memory 19 to request the common data in other than the state such as that of the instruction fetch, the output from the NAND circuit 11 becomes to be 1. In other words, when the MPU 1 accomplishes a word access on the memory 19 to request the common data, the AND circuit 13 outputs 1 and hence the selectors 29-32 select signals on the input terminals $D_8$-$D_{15}$. As a result, when the signal $\overline{RD}$ is 0 for a memory read operation, the selectors 31-32 are enabled and the signals $D_0$-$D_7$ read from the memory 19 are selected by the selector 32 and are delivered to the terminals $D_8$-$D_{15}$ of the transceiver 16; whereas the signals $D_8$-$D_{15}$ read from the memory 19 are selected by the selector 31 and are delivered to the terminals $D_0$-$D_7$ of the transceiver

16. That is, the locations of the high-order and low-order bytes of the word are exchanged and the resultant word with the converted byte sequence is inputted to the MPU 1. In addition, when the signal $\overline{WR}$ is 0 for a memory write operation, the selector 29-30 are enabled, the signals $D_0$-$D_7$ sent from the MPU 1 via the transceiver 16 are selected by the selector 30 and are delivered to the terminals $D_8$-$D_{15}$ of the memory 19; whereas the signals $D_8$-$D_{15}$ fed from the MPU 1 via the transceiver 16 are selected by the selector 29 and are delivered to the terminals $D_0$-$D_7$ of the memory 19. That is, the locations of the high-order and low-order bytes of the word are exchanged and the resultant word with the converted byte sequence is written in the memory 19. When the MPU 1 accesses the memory 19 in other than the cases above, the output from the AND circuit 13 becomes to be 0 and the selector 29-32 select the signals on the input terminals $D_0$-$D_7$; consequently, the data transfer is effected between the MPU 1 and the memory 19 according to the word access method of the MPU 1. Furthermore, when the MPU 2 accesses the memory 19, the AND circuit 13 does not delivers an output therefrom in any cases and hence the selectors 29-32 select the signals on the input terminals $D_0$-$D_7$; consequently, the data transfer is achieved between the MPU 2 and the memory 19 according to the word access method of the MPU 2.

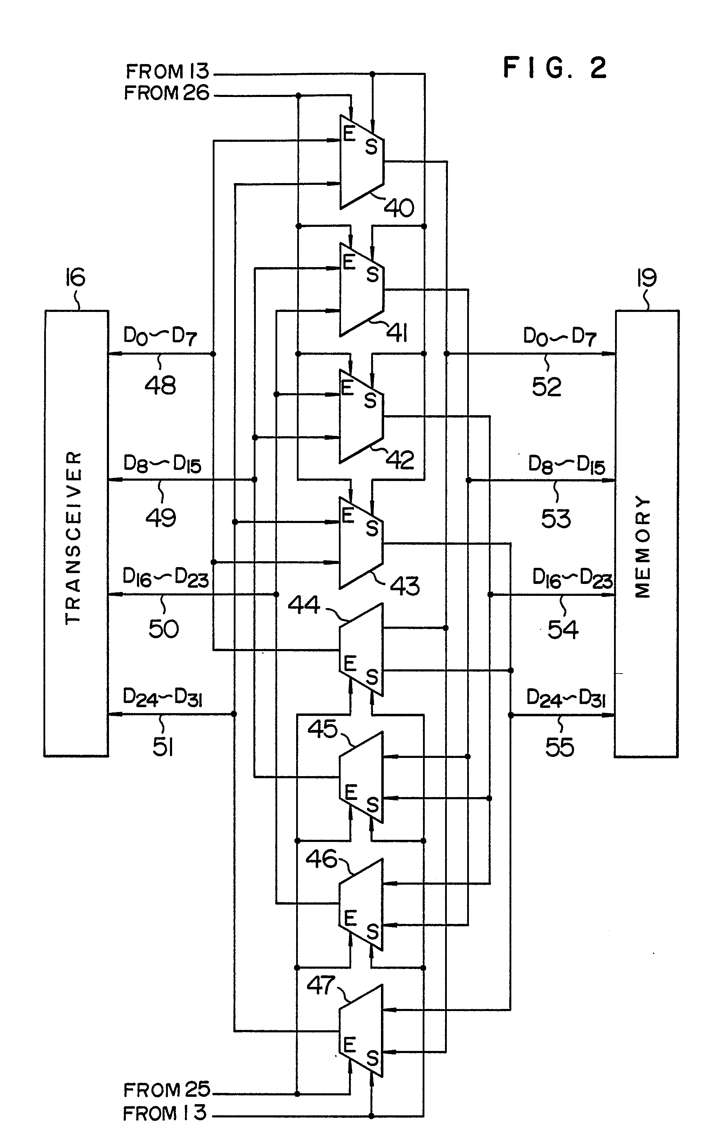

FIG. 2 is a block diagram schematically showing the configuration of another embodiment according to the present invention in which a microprocessor processes each word comprising 32 bits (four bytes). The configuration not illustrated in FIG. 2 is the same as that of FIG. 1 excepting that signals $AD_0$-$AD_{31}$ are used for the signals $AD_0$-$AD_{15}$ of the MPU 1, signals $BD_0$-$BD_{15}$ stand for the signals $BD_0$-$BD_{15}$ of the MPU 2, and the data buses 14-15 each include 32 signal lines (for 32 bits).

In FIG. 2, reference numerals 40-43 are selectors for selecting data signals outputted from the transceiver 16, namely, either $D_0$-$D_7$ or $D_{24}$-$D_{31}$, either $D_8$-$D_{15}$ or $D_{16}$-$D_{23}$, either $D_{16}$-$D_{23}$ or $D_8$-$D_{15}$, and $D_{24}$-$D_{31}$ or $D_0$-$D_7$, respectively. Reference numerals 44-47 are selectors for selecting data signals outputted from the memory 19, namely, either $D_0$-$D_7$ or $D_{24}$-$D_{31}$, either $D_8$-$D_{15}$ or $D_{16}$-$D_{23}$, either $D_{16}$-$D_{23}$ or $D_8$-$D_{15}$, and $D_{24}$-$D_{31}$ or $D_0$-$D_7$, respectively. In this configuration, signal lines 48-55 are respectively provided for 8-bit parallel transfer operations. The connections among the transceiver 16, the memory 19, the selectors 40-47, the AND circuit 13, and the inverter 25 and 26 are identical to those of FIG. 2.

Next, referring now to FIG. 2, a description will be given of another embodiment according to the present invention. In this configuration, when the MPU 1 effects a word access to the memory 19 to request common data, the output from the AND circuit 13 becomes to be 1 and hence the selectors 40-47 select the respective select signals on the second input terminals. Consequently, when the signal $\overline{RD}$ is 0 for a memory read operation, the selectors 44-47 are enabled so that the signals $D_0$-$D_7$ read from the memory 19 are selected by the selector 47 and are then inputted to the terminals $D_{24}$-$D_{31}$ of the transceiver 16. Similarly, the signals $D_8$-$D_{15}$ are selected by the selector 46 so as to be inputted to the terminals $D_{16}$-$D_{23}$ of the transceiver 16; moreover, the signals $D_{16}$-$D_{23}$ are further selected by the selector 45 and are then inputted to the terminals $D_8$-$D_{15}$ of the transceiver 16. The signals $D_{24}$-$D_{31}$ are selected by the selector 44 so as to be inputted to the terminals $D_0$-$D_7$ of the transceiver 16. Namely, the locations of the bytes constituting each word are exchanged or reversed and the resultant data is delivered to the MPU 1. In addition, when the signal $\overline{WR}$ is 0 for a memory write operation, the selectors 40-43 are enabled and hence the signals $D_0$-$D_7$ sent from the MPU 1 via the transceiver 16 are selected by the selector 43 and are then inputted to the terminals $D_{24}$-$D_{31}$ of the memory 19, the signals $D_8$-$D_{15}$ are selected by the selector 42 so as to be fed to the terminals $D_{16}$-$D_{23}$ of the memory 19, the signals $D_{16}$-$D_{23}$ are selected by the selector 41 and are inputted to the terminals $D_8$-$D_{15}$ of the memory 19, and the signals $D_{24}$-$D_{31}$ are selected by the selector 40 so as to be delivered to the terminals $D_0$-$D_7$ of the memory 19. Namely, the locations of the bytes constituting each word are reversed and the resultant data is written in the memory 19. It can be readily understood that when the memory 19 is accessed by the MPU 1 under conditions other than those above, the byte sequence of each word is not changed and hence the word is directly transferred between the transceiver 16 and the memory 19.

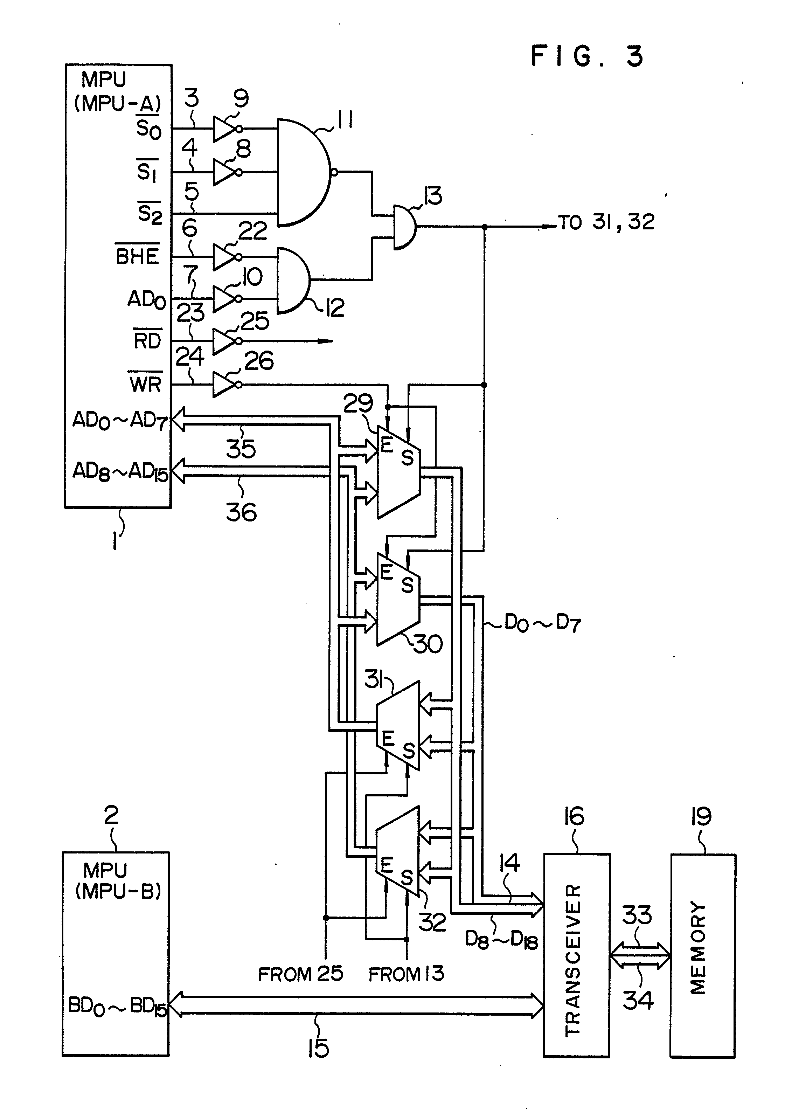

FIG. 3 is a schematic block diagram showing a configuration of still another embodiment according to the present invention. This embodiment develops a function which is the same as that of the embodiment of FIG. 1 and a circuit to convert the byte sequence is constituted with selectors 29-32. The same circuit elements are assigned with the same reference numerals in FIGS. 1 and 3. In place of the data buses 27 and 28 from the transceiver 16 of FIG. 1, there are disposed data buses 35 and 36 from the MPU 1 in FIG. 3. Incidentally, the word configuration of FIG. 3 can be easily expanded to a 4-byte configuration based on FIGS. 2 and 3.

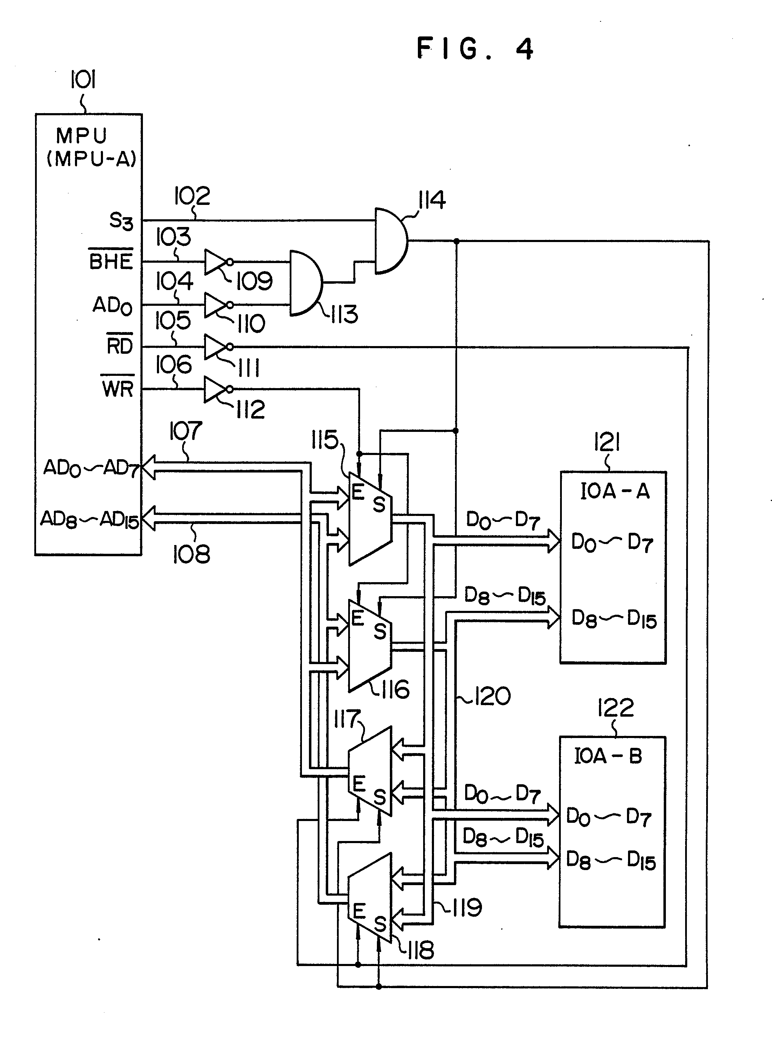

FIG. 4 is a block diagram schematically showing a constitution of further another embodiment according to the present invention in which IOA 121 is an I/O adapter operating in the word access method of the MPU-A and IOA 122 is an I/O adapter operating in the word access method of the MPU-B, and the IOA 121 and the IOA 122 are accessed from a processor MPU 101 of the word access method of the MPU-A. Signal $S_3$ indicates a state of the MPU 101. This configuration further includes inverters 109-112 and AND circuits 113 and 114. These components are disposed on the side of the MPU 101. Reference numerals 115 and 116 are selectors respectively selecting either data signals $AD_0$-$AD_7$ or $AD_8$-$AD_{15}$ outputted from the MPU 101. Reference numerals 117 and 118 are selectors respectively selecting either data signals $D_0$-$D_7$ or $D_8$-$D_{15}$ outputted from the I/O adapters 121 and 122. There is disposed a circuit comprising the selectors 115-118 to exchange the bytes of each word on the side of the MPU 101. A signal $\overline{RD}$ from the MPU 101 to request a read operation via the I/O adapter 121 is connected via a signal line 105 and an inverter 111 to the enable terminals of the selectors 117 and 118, whereas a signal $\overline{WR}$ from the MPU 101 to request a write operation via the I/O adapter 121 is connected via a signal line 106 and an inverter 112 to the enable terminals of the selectors 115 and 116. For a read operation via the I/O adapters 121 and 122, the selectors 117 and 118 are enabled, whereas for a write operation via the I/O adapters 121 and 122, the selectors 115 and 116 are enabled.

Next, operations of the embodiment will be described. When the MPU 101 accomplishes a word access to the I/O adapter 121, the signals $\overline{BHE}$ and $AD_0$ both become to be 0 and hence the AND circuit 113 outputs 1. When the MPU 101 accesses the I/O adapter 121 of the word access method of the MPU-A, $S_3 = 0$ results and hence the output from the AND circuit 114 becomes to be 0. When the MPU 101 accesses the I/O adapter 122 operating in the word access method of the MPU-B, $S_3 = 1$ results and hence the output from the AND circuit 114 becomes to be 1. Namely, when the MPU 101 effects a word access to attain data via the IOA 122, the AND circuit 114 outputs 1 and the data read signals $\overline{RD}$ for the data read operation from the I/O adapter 122 becomes to be 0, which causes the selectors 117 and 118 to be enabled. As a result, the signal data $D_0$-$D_7$ read from the IOA 122 are selected by the selector 118 so as to be inputted to the terminals $D_8$-$D_{15}$ of the MPU 101 and the data $D_8$-$D_{15}$ read from the IOA 122 are selected by the selector 117 and are inputted to the terminals $D_0$-$D_7$ of the MPU 101. Namely, when the data of the IOA 122 is accessed, the high-order byte and the low-order byte of the word are inverted and the resultant word is inputted to the MPU 101. Also in the case of the write operation, the high-order byte and the low-order byte of the word from the MPU 101 are reversed and the resultant word is inputted to the IOA 122.

When the MPU 101 accesses the IOA 121, the AND circuit 114 outputs 0 and hence the word data received on the input side of the selectors 115 and 116 are directly delivered to the output sides thereof. Similarly, the word data received on the input sides of the selectors 117 and 118 are directly outputted to the side of the MPU 101. As a result, the MPU 101 effects the data transfer between the MPU 101 and the IOA 121 according to the word access method of the IOA 121.

Incidentally, the word configuration of FIG. 4 can be easily expanded to a 4-byte configuration based on FIGS. 2-4.

In the embodiment above, the byte sequence conversion circuit including the selectors and the device to which the byte sequence conversion circuit is attached may be integrated to one device as follows.

(1) The selectors 29-32 and the memory 19 may be integrated to one storage device.

(2) Although the selectors 29-32 of FIG. 3 is attached to the arithmetic unit, the MPU 1, these components may be combined with the MPU 101 into a processor.

(3) Although the selectors 115-118 of FIG. 4 is attached to the arithmetic unit, MPU 101, these components may be combined with the MPU 101 into a processor.

While the present invention has been described with reference to the particular illustrative embodiments, it is not restricted by those embodiments but only by the appended claims. It is to be appreciated that those skilled in the art can change and modify the embodiments without departing from the scope and spirit of the present invention.

## Claims

1. A computer system having memory means (19) for storing information and processors (1, 2) effecting on said memory means read and write operations of the information in a unit of a word including a plurality of bytes comprising:
conversion means (29-32, 40-47) disposed between said memory means and said processors for directly transferring said word or for transferring said word with reversing a sequence of bytes constituting said word in response to a control signal sent from said processors.

2. A computer system according to Claim 1 wherein said word includes information of two bytes.

3. A computer system according to Claim 1 wherein said word includes information of four bytes.

4. A computer system according to Claim 1 further including a transceiver (16) disposed between said conversion means and said memory means to drive and to transfer a signal representing said information.

5. A storage comprising:

memory means (19) for storing information; and

conversion means (29-32, 40-47) disposed between said memory means and processor (1, 2) which effects on said memory means read and write operations of the information in a unit of a word including a plurality of bytes for directly transferring said word or for transferring said word with reversing a sequence of bytes constituting said word in response to a control signal sent from said processors.

6. A storage according to Claim 5 wherein said word includes information of two bytes.

7. A storage according to Claim 5 wherein said word includes information of four bytes.

8. A processor comprising:

memory means (19) for storing information;

processing means (1, 2) for effecting on said memory means read and write operations of the information in a unit of a word including a plurality of bytes; and

conversion means disposed between said memory means and said processing means for directly transferring said word or for transferring said word with a conversion of a sequence of bytes constituting said word in response to a control signal sent from said processing means.

9. A processor according to claim 8 wherein said word includes information of two bytes. —

10. A processor according to Claim 8 wherein said word includes information of four bytes.

11. A computer system having input/output control means (121, 122) for controlling input/output devices and a processor (101) effecting on said input/output control means read and write operations of the information in a unit of a word including a plurality of bytes comprising:

conversion means (115-118) disposed between said input/output control means and said processor for directly transferring said word or for transferring said word with reversing a sequence of bytes constituting said word in response to a control signal sent from said processor.

12. A computer system according to Claim 11 wherein said word includes information of two bytes.

13. A computer system according to Claim 11 wherein said word includes information of four bytes.

14. A processor comprising:

input/output control means (121, 122) for controlling input/output devices;

processing means (101) for effectint on said input/output control means read and write operations of the information in a unit of a word including a plurality of bytes; and

conversion means (115-118) disposed between said input/output control means and said processor for directly transferring said word or for transferring said word with reversing a sequence of bytes constituting said word in response to a control signal sent from said processor.

15. A computer system according to Claim 14 wherein said word includes information of two bytes.

16. A computer system according to Claim 14 wherein said word includes information of four bytes.

F I G . I

F I G. 2

0 282 969

F I G. 3

# F I G. 4

# F I G. 5a

$(1000)_{16}$
$(1001)_{16}$

$(01)_{16}$

$(23)_{16}$

# F I G. 5b

$(1000)_{16}$
$(1001)_{16}$

$(23)_{16}$

$(01)_{16}$